# EUROPÄISCHE PATENTSCHRIFT

(11) **EP 3 754 165 B1**
(45) Veröffentlichungstag und Bekanntmachung des Hinweises auf die Patenterteilung: **10.07.2024**
(21) Anmeldenummer: 20175161.7
(22) Anmeldetag: 18.05.2020
(51) Int. Cl.: F01N 13/18, F01N 1/00, B60K 13/04

(54) **KOMPONENTE FÜR EINE ABGASANLAGE EINER BRENNKRAFTMASCHINE**
COMPONENT FOR AN EXHAUST GAS SYSTEM OF A COMBUSTION ENGINE
COMPOSANT POUR UN SYSTÈME DE GAZ D'ÉCHAPPEMENT D'UN MOTEUR À COMBUSTION INTERNE

(30) Priorität: 17.06.2019 DE 102019116336
(43) Veröffentlichungstag der Anmeldung: 23.12.2020
(73) Patentinhaber: Purem GmbH, 66539 Neunkirchen (DE)
(72) Erfinder: Röhr, Benjamin, 73732 Esslingen (DE); Berkemer, Frank, 72800 Eningen (DE); Tchamgoue, Herve, 72574 Bad Urach (DE); Müller, Thomas, 66916 Breitenbach (DE)
(74) Vertreter: Ruttensperger Lachnit Trossin Gomoll

(56) Entgegenhaltungen:
- WO-A1-2012/087224
- JP-A- 2004 340 114
- US-A1- 2008 142 657
- US-A1- 2012 152 643
- US-B2- 9 090 158

## Beschreibung

Die vorliegende Erfindung betrifft eine Komponente für eine Abgasanlage einer Brennkraftmaschine, wie zum Beispiel einen in einem Endbereich einer derartigen Abgasanlage vorgesehenen Nachschalldämpfer.

Zur Befestigung einer Abgasanlage in einem Fahrzeug sind an einer derartigen Abgasanlage mehrere Anbindungsbereiche vorgesehen, in welchen im Allgemeinen unter Verwendung von mit elastischem Material ausgebildeten Anbindungselementen eine derartige Abgasanlage an der Unterseite eines Fahrzeugs, insbesondere im Bereich eines Unterbodens des Fahrzeugs, festgelegt werden kann. In Zuordnung zu verschiedenen Komponenten, wie zum Beispiel Nachschalldämpfern, sind im Allgemeinen zwei derartige Anbindungsbereiche vorgesehen, um eine stabile Anbindung an ein Fahrzeug zu gewährleisten.

Eine Komponente für eine Abgasanlage gemäß dem Oberbegriff des Anspruchs 1 ist aus der US 2008/0142657 A1 bekannt.

Es ist die Aufgabe der vorliegenden Erfindung, eine Komponente für eine Abgasanlage einer Brennkraftmaschine vorzusehen, mit welcher eine stabile und eine übermäßige Belastung der Komponente selbst vermeidende Anbindung an ein Fahrzeug erreicht wird.

Erfindungsgemäß wird diese Aufgabe gelöst durch eine Komponente für eine Abgasanlage einer Brennkraftmaschine gemäß Anspruch 1. Diese umfasst ein in Richtung einer Gehäuseachse langgestrecktes Komponentengehäuse mit einem Abgaseinlass und einem Abgasauslass und eine Trägerbaugruppe zur Anbindung der Komponente an eine Trägerstruktur, wobei die Trägerbaugruppe einen Trägerstab umfasst, wobei der Trägerstab in wenigstens zwei entlang des Trägerstabs in Abstand zueinander liegenden Befestigungsbereichen an dem Komponentengehäuse festgelegt ist und zwei Trägerstab-Endbereiche aufweist und an jedem Trägerstab-Endbereich ein Trägerstab-Anbindungsbereich zur Anbindung an die Trägerstruktur vorgesehen ist.

Durch den Einsatz eines Trägerstabs, der einerseits in mehreren Befestigungsbereichen an dem Komponentengehäuse der Komponente befestigt ist und der andererseits in zumindest einem Trägerstab-Anbindungsbereich an eine Trägerstruktur an einem Fahrzeug angebunden werden kann, wird eine stabile Halterung gewährleistet, bei welcher die zwischen der Trägerstruktur und der Komponente wirkenden Kräfte zum großen Teil auch über den Trägerstab übertragen und somit von der Komponente ferngehalten werden können. Der Trägerstab kann bei geringen Fertigungskosten sehr stabil und die auftretenden Kräfte somit ohne die Gefahr einer Beschädigung aufnehmend ausgebildet werden.

Das Komponentengehäuse umfasst eine in Richtung der Gehäuseachse langgestreckte Umfangswandung. Da diese Umfangswandung im Allgemeinen aus einem einzigen, beispielsweise rohrartig ausgebildeten Bauteil besteht, wird die auf die Komponente einwirkende Belastung dann dadurch gering gehalten, dass der Trägerstab in wenigstens zwei bzw. allen Befestigungsbereichen an der Umfangswandung befestigt ist.

Für eine stabile Anbindung ist es besonders vorteilhaft, wenn die Befestigungsbereiche einen möglichst großen Abstand zueinander aufweisen. Es ist daher in jedem axialen Endbereich der Umfangswandung ein derartiger eine feste Verbindung mit dem Trägerstab herstellender Befestigungsbereich vorgesehen.

Für eine stabile Verbindung zwischen dem Trägerstab und dem Komponentengehäuse umfasst jeder Befestigungsbereich ein an dem Komponentengehäuse und dem Trägerstab festgelegtes Befestigungselement.

Weiter ist zum Erhalt eines einfach und kostengünstig zu realisierenden Aufbaus das Befestigungselement an dem Komponentengehäuse und dem Trägerstab durch Materialschluss, vorzugsweise Verschweißen, festgelegt.

Für die stabile Anbindung an eine in einem Fahrzeug vorgesehene Trägerstruktur weist der Trägerstab zwei Trägerstab-Endbereiche auf. An jedem Trägerstab-Endbereich ist einer der Trägerstab-Anbindungsbereiche vorgesehen.

Um im Bereich der Trägerstab-Anbindungsbereiche die Übertragung von Schwingungen bzw. Stößen zwischen der Komponente und der Trägerstruktur soweit als möglich zu vermeiden, umfasst jeder Trägerstab-Anbindungsbereich ein wenigstens bereichsweise mit elastischem Material, wie zum Beispiel Gummimaterial, aufgebautes Anbindungselement.

Zum realisieren eines einfach herzustellenden Aufbaus ist der Trägerstab vollständig außerhalb des Komponentengehäuses angeordnet.

Bei einer stabilen, gleichwohl ein geringes Gewicht bereitstellenden Ausgestaltung kann der Trägerstab rohrartig ausgebildet sein.

Der Trägerstab ist zwischen seinen Trägerstab-Anbindungsbereichen sich im Wesentlichen geradlinig erstreckend ausgebildet.

Für eine das Komponentengehäuse wenig belastende Verbindung ist der Trägerstab in wenigstens zwei in Richtung der Gehäuselängsachse in Abstand zueinander angeordneten Befestigungsbereichen an dem Komponentengehäuse befestigt. Weiter kann dabei der Trägerstab in seinem mit den Befestigungsbereichen zusammenwirkenden Längenbereich sich im Wesentlichen in Richtung der Gehäuselängsachse erstreckend angeordnet sein.

Für die Einbindung der Komponente in eine Abgasanlage umfasst der Abgaseinlass wenigstens ein an eine Stirnwand des Komponentengehäuses angebundenes Einlassrohr. Der Abgasauslass umfasst wenigstens ein an eine andere Stirnwand des Komponentengehäuses angebundenes, beispielsweise ein Endrohr bereitstellendes Auslassrohr.

Die Komponente kann ein Schalldämpfer, vorzugsweise Nachschalldämpfer, sein.

Die Erfindung betrifft ferner eine Abgasanlage für eine Brennkraftmaschine, insbesondere in einem Kraftfahrzeug, umfassend eine erfindungsgemäß aufgebaute Komponente.

Die vorliegende Erfindung wird nachfolgend mit Bezug auf die beiliegenden Figuren detailliert beschrieben. Es zeigt:
- Fig. 1: eine perspektivische Ansicht einer Abgasanlage für eine Brennkraftmaschine in einem Fahrzeug;
- Fig. 2: einen Draufsicht auf die Abgasanlage der Fig. 1;
- Fig. 3: eine Ansicht der Abgasanlage der Fig. 1 in Blickrichtung III in Fig. 1.

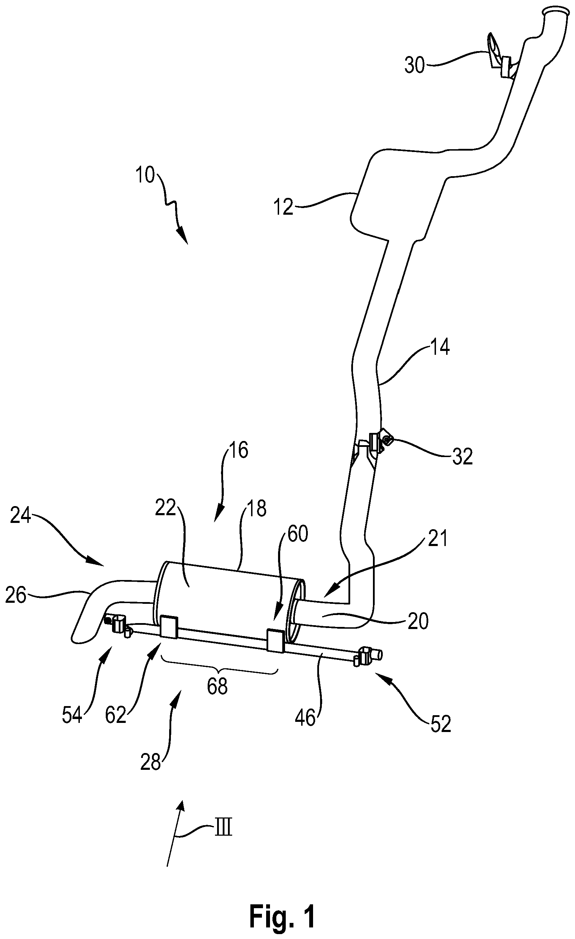

In den Fig. 1-3 ist eine Abgasanlage für eine Brennkraftmaschine in einem Fahrzeug allgemein mit 10 bezeichnet. Die Abgasanlage 10 umfasst in einem stromaufwärtigen Bereich eine beispielsweise über einen nicht dargestellten Auslasskrümmer an eine Brennkraftmaschine anzubindende Abgasbehandlungseinheit 12. Diese kann beispielsweise einen Katalysator, einen Partikelfilter, einen Hauptschalldämpfer oder dergleichen umfassen. Ein auf die Abgasbehandlungseinheit 12 folgendes Abgasrohr 14 führt zu einer Komponente 16 der Abgasanlage 10, welche im dargestellten Beispiel als Nachschalldämpfer 18 ausgebildet ist. Dabei mündet ein ein Einlassrohr 20 eines Abgaseinlasses 21 bereitstellender Endbereich des Abgasrohrs 14 in ein Komponentengehäuse 22 der Komponente 16 bzw. des Nachschalldämpfers 18 ein. Ein einen Abgasauslass 24 in Form eines Endrohrs bereitstellendes Auslassrohr 26 führt aus dem Komponentengehäuse 22 heraus.

Die Abgasanlage 10 kann stromaufwärts bzw. auch stromabwärts der Abgasbehandlungseinheit 12 über Anbindungsbereiche 30, 32 an eine Trägerstruktur in einem Fahrzeug, beispielsweise im Bereich eines Unterbodens, angebunden bzw. daran aufgehängt werden. In Zuordnung zu der als Nachschalldämpfer 18 ausgebildeten Komponente ist eine Trägerbaugruppe 28 vorgesehen, vermittels welcher die Komponente 16 an der Trägerstruktur festgelegt bzw. aufgehängt werden kann.

Insbesondere im Bereich der Anbindung der Komponente 16 an die Trägerstruktur eines Fahrzeugs werden zwischen der Trägerstruktur und der Komponente 16 bzw. dem Komponentengehäuse 22 wirkende Kräfte zum Erzeugen eines Kraftrückschlusses über das Komponentengehäuse 22 übertragen. Dies kann zu starken Belastungen führen, so dass das Erfordernis besteht, das Komponentengehäuse 22 entsprechend stabil auszugestalten.

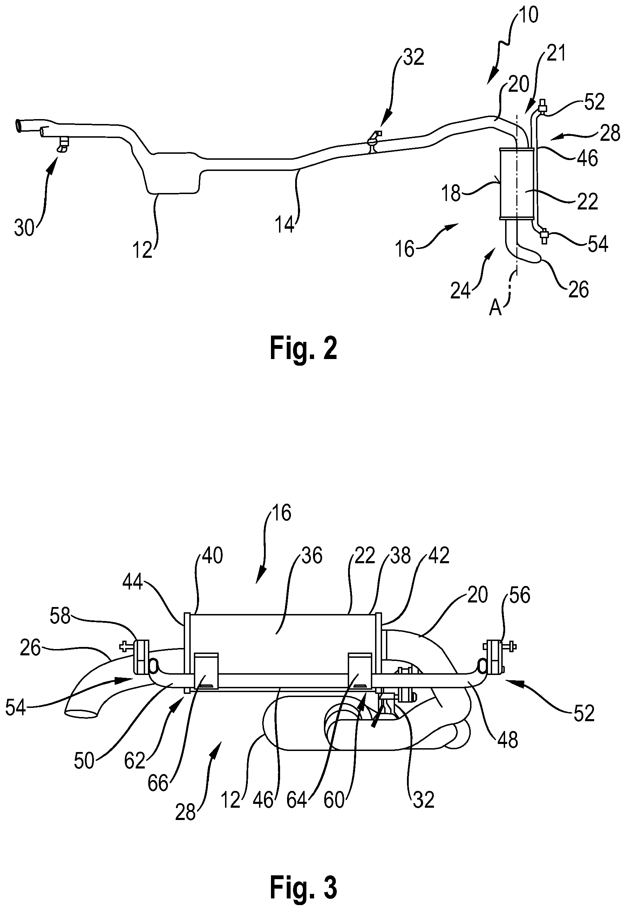

Bei der in den Fig. 1-3 dargestellten Abgasanlage werden derartige Kräfte von dem Komponentengehäuse 22 weitestgehend ferngehalten. Wie in Fig. 2 deutlich erkennbar, umfasst das Komponentengehäuse 22 eine beispielsweise zylindrisch ausgebildete und in Richtung einer Gehäuselängsachse A langgestreckte Umfangswandung 36. An beiden axialen Endbereichen 38, 40 der Umfangswandung 36 sind mit der Umfangswandung 36 durch Formschluss oder/und Materialschluss fest verbundene Stirnwände 42, 44 vorgesehen. An die Stirnwand 42 ist das Einlassrohr 20 angebunden. An die Stirnwand 44 ist das Auslassrohr 26 angebunden.

Die zur Anbindung der Komponente 16 an eine Trägerstruktur eines Fahrzeugs vorgesehene Trägerbaugruppe 28 umfasst einen beispielsweise als Rohr, also rohrartig ausgebildeten, vollständig außerhalb des Komponentengehäuses 22 verlaufenden Trägerstab 46 z.B. aus Metallmaterial. Dieser ist zwischen seinen Trägerstab-Endbereichen 48, 50 sich im Wesentlichen geradlinig erstreckend ausgebildet und stellt in jedem seiner Endbereiche 48, 50 einen Trägerstab-Anbindungsbereich 52, 54 bereit. In den beiden Trägerstab-Endbereichen 48, 50 ist der Trägerstab 46 umgebogen und in den umgebogenen Bereichen mit jeweiligen Anbindungselementen 56, 58 verbunden. Diese Anbindungselemente 56, 58 sind durch Verschraubung oder/und Materialschluss an den Trägerstab 46 angebunden und weisen mit elastischem Material, wie z. B. Gummimaterial, aufgebaute Übertragungselemente auf. An der Trägerstruktur eines Fahrzeugs können diese Anbindungselemente 56, 58 beispielsweise durch Verschraubung festgelegt werden.

Der Trägerstab 46 ist im dargestellten Beispiel in zwei in Richtung der Gehäuseachse A in Abstand zueinander angeordneten, insbesondere in den Endbereichen 38, 40 des Komponentengehäuses 22 bzw. der Umfangswandung 36 vorgesehenen Befestigungsbereichen 60, 62 am Komponentengehäuse 22 befestigt sein. Jeder der Befestigungsbereiche 60, 62 kann ein beispielsweise als Lasche ausgebildetes, an der Außenseite der Umfangswandung 36 des Komponentengehäuses 22 durch Verschweißung festgelegtes Befestigungselement 64 bzw. 66 umfassen, das auch am Trägerstab 46 durch Verschweißung festgelegt ist. In seinem zur Befestigung an dem Komponentengehäuse 22 vorgesehenen, mit den Befestigungsbereichen 60, 62 zusammenwirkenden Längenbereich 68 erstreckt der Trägerstab 46 sich im Wesentlichen in Richtung der Gehäuseachse A und ist, so wie in seinen auch außerhalb des Längenbereichs 68 liegenden Längenabschnitten, im Wesentlichen geradlinig sich erstreckend ausgebildet.

Die Anbindung einer mit einer derartigen Komponente 16 ausgebildeten Abgasanlage 10 an die Trägerstruktur eines Fahrzeugs erfolgt im Bereich der beiden Anbindungsbereiche 52, 54 des Trägerstabs 46. Dadurch wird ein vergleichsweise großer Abstand der die Anbindung an die Trägerstruktur bereitstellenden Anbindungsbereiche 52, 54 gewährleistet, der deutlich größer ist, als der Abstand der zwischen dem Trägerstab 46 und dem Komponentengehäuse 42 wirkenden Befestigungsbereiche 60, 62. Auch die beiden Befestigungsbereiche 60, 62 weisen einen vergleichsweise großen Abstand zueinander auf, da sie jeweils in den Endbereichen 38, 40 des Komponentengehäuses 22 wirken, also zu einem jeweiligen axialen Ende beispielsweise der Umfangswandung 36 bzw. dem daran festgelegten Stirnwänden 42, 44 einen geringeren Abstand aufweisen, als zum axialen Mittenbereich der Umfangswandung 36.

Durch den Einsatz der in Fig. 1-3 dargestellten Trägerbaugruppe 28 wird eine mit einer vergleichsweise geringen Anzahl an Bauteilen bereitgestellte, stabile und die Komponente 16 vergleichsweise wenig belastende Anbindung an ein Fahrzeug gewährleistet.

Es ist darauf hinzuweisen, dass eine erfindungsgemäß aufgebaute Komponente bzw. die für diese vorgesehene Trägerbaugruppe 28 auch anders ausgestaltet sein könnte, als dargestellt. So könnte beispielsweise das Komponentengehäuse 22, anders als in Fig. 2 dargestellt, nicht mit einer Umfangswandung und an deren beiden Endbereichen jeweils vorgesehenen Stirnwänden als separate Bauteile ausgebildet sein, sondern, so wie in Fig. 1 im Zusammenhang mit der Abgasbehandlungseinheit 12 dargestellt, mit zwei Halbschalen, von welchen jede jeweils einen Teil einer Umfangswandung und einen Teil der beiden Stirnwände bereitstellt. Es könnten mehr als zwei Befestigungsbereiche 60, 62 vorgesehen sein, und der Trägerstab 46 könnte beispielsweise in einem außerhalb des Längenbereichs 68 liegenden Bereich zur Anpassung an die Trägerstruktur eines Fahrzeugs bereichsweise gekrümmt ausgebildet sein.

## Patentansprüche

1. Komponente für eine Abgasanlage einer Brennkraftmaschine, umfassend ein in Richtung einer Gehäuseachse (A) langgestrecktes Komponentengehäuse (22) mit einem Abgaseinlass (21) und einem Abgasauslass (24) und eine Trägerbaugruppe (28) zur Anbindung der Komponente (16) an eine Trägerstruktur, wobei die Trägerbaugruppe (28) einen Trägerstab (36) umfasst, wobei der Trägerstab (46) in wenigstens zwei entlang des Trägerstabs (46) in Abstand zueinander liegenden Befestigungsbereichen (60, 62) an dem Komponentengehäuse (22) festgelegt ist und zwei Trägerstab-Endbereiche (48, 50) aufweist und an jedem Trägerstab-Endbereich (48, 50) ein Trägerstab-Anbindungsbereich (52, 54) zur Anbindung an eine Trägerstruktur vorgesehen ist, wobei der Trägerstab (46) vollständig außerhalb des Komponentengehäuses (22) angeordnet und zwischen seinen Trägerstab-Anbindungsbereichen (52, 54) sich im Wesentlichen geradlinig erstreckend ausgebildet ist, wobei das Komponentengehäuse (22) eine in Richtung der Gehäuseachse (A) langgestreckte Umfangswandung (36) umfasst und an jedem axialen Endbereich (38, 40) der Umfangswandung (36) eine Stirnwand (42, 44) durch Formschluss oder/und Materialschluss mit der Umfangswandung (36) verbunden ist, wobei der Abgaseinlass (21) wenigstens ein an eine der Stirnwände (42, 44) angebundenes Einlassrohr (20) umfasst und der Abgasauslass (24) wenigstens ein an die andere der Stirnwände (42, 44) angebundenes Auslassrohr (26) umfasst, wobei der Trägerstab (46) in wenigstens zwei Befestigungsbereichen (60, 62) an der Umfangswandung (36) befestigt ist, wobei einer der Befestigungsbereiche (60, 62) dadurch in einem der axialen Endbereiche (38, 40) der Umfangswandung (36) vorgesehen ist, dass dieser Befestigungsbereich zu der an diesem axialen Endbereich der Umfangswandung (36) vorgesehenen Stirnwand einen geringeren Abstand aufweist als zu einem axialen Mittenbereich der Umfangswandung,
**dadurch gekennzeichnet,**
- **dass** ein anderer der Befestigungsbereiche (60, 62) dadurch in dem anderen der axialen Endbereiche (38, 40) der Umfangswandung (36) vorgesehen ist, dass dieser Befestigungsbereich zu der an diesem axialen Endbereich der Umfangswandung (36) vorgesehenen Stirnwand einen geringeren Abstand aufweist als zu dem axialen Mittenbereich,
- **dass** jeder Befestigungsbereich (60, 62) ein an dem Komponentengehäuse (22) und dem Trägerstab (46) durch Materialschluss festgelegtes Befestigungselement (64, 66) umfasst, und
- **dass** der Trägerstab (46) in seinen Trägerstab-Endbereichen (48,50) umgebogen ist und jeder Trägerstab-Anbindungsbereich (52, 54) ein wenigstens bereichsweise mit elastischem Material aufgebautes, durch Verschraubung oder/und Materialschluss in jeweils einem der umgebogenen Bereiche an den Trägerstab (46) angebundenes Anbindungselement (56, 58) umfasst.

2. Komponente nach Anspruch 1, **dadurch gekennzeichnet, dass** das Befestigungselement (64, 66) an dem Komponentengehäuse (22) und dem Trägerstab (46) durch Verschweißen festgelegt ist.

3. Komponente nach einem der vorangehenden Ansprüche, **dadurch gekennzeichnet, dass** der Trägerstab (46) rohrartig ausgebildet ist.

4. Komponente nach einem der vorangehenden Ansprüche, **dadurch gekennzeichnet, dass** der Trägerstab (46) in seinem mit den Befestigungsbereichen (60, 62) zusammenwirkenden Längenbereich (68) sich im Wesentlichen in Richtung der Gehäuselängsachse (A) erstreckend angeordnet ist.

5. Komponente nach einem der vorangehenden Ansprüche, **dadurch gekennzeichnet, dass** die Komponente (16) ein Schalldämpfer, vorzugsweise Nachschalldämpfer (18), ist.

6. Abgasanlage für eine Brennkraftmaschine, insbesondere in einem Kraftfahrzeug, umfassend eine Komponente (16) nach einem der vorangehenden Ansprüche.

## Claims

1. Component for an exhaust system of an internal combustion engine, comprising a component housing (22) elongated in the direction of a housing axis (A) with an exhaust gas inlet (21) and with an exhaust gas outlet (24) and a carrier assembly unit (28) for connecting the component (16) to a carrier structure, wherein the carrier assembly unit (28) comprises a carrier rod (36), wherein the carrier rod (46) is fixed to the component housing (22) in at least two fastening areas (60, 62) located at spaced locations from one another along the carrier rod (46) and comprises two carrier rod end areas (48, 50) an at each carrier rod end area (48, 50) at least one carrier rod connection area (52, 54) for connection to a carrier structure, wherein the carrier rod (46) is arranged entirely outside of the component housing (22) and is configured as extending essentially linearly between its carrier rod connection areas (52, 54), wherein the component housing (22) comprises a circumferential wall (36) elongated in the direction of the housing axis (A) and a front wall (42, 44) is connected to the circumferential wall (36) by connection in form or/and connection in substance in each axial end region (38, 40) of the circumferential wall (36), wherein the exhaust gas inlet (21) comprises at least one inlet pipe (20) that is connected to one of the front walls (42, 44) and wherein the exhaust gas outlet (24) comprises at least one outlet pipe (26) that is connected to the other one of the front walls (42, 44), wherein the carrier rod (46) is fastened to the circumferential wall (36) in at least two fastening areas (60, 62), wherein at least one fastening area (60, 62) is provided such in an axial end area (38, 40) of the circumferential wall (36) that that fastening area has a smaller distance to the front wall provided in this axial end region of the circumferential wall (36) than to an axial center area of the circumferential wall,
**characterized in that**
- another one of the fastening areas (60, 62) is provided such in the other one of the axial end areas (38, 40) of the circumferential wall (36) that this fastening area has a smaller distance to the front wall provided in this axial end region of the circumferential wall (36) than to the axial center area,
- each fastening area (60, 62) comprises a fastening element (64, 66) fixed to the component housing (22) and to the carrier rod (46) by connection in substance, and
- the carrier rod (46) is bent in its carrier rod end areas (48, 50) and **in that** each carrier rod connection area (52, 54) comprises a connection element (56, 58) which is made of elastic material in at least some areas and is connected to the carrier rod (46) in respectively one of the bent areas by screwing or/and connection in substance.

2. Component in accordance with claim 1, **characterized in that** the fastening element (64, 66) is fixed to the component housing (22) and to the carrier rod (46) by welding.

3. Component in accordance with one of the above claims, **characterized in that** the carrier rod (46) has a tubular configuration.

4. Component in accordance with one of the above claims, **characterized in that** the carrier rod (46) is arranged extending essentially in the direction of the housing longitudinal axis (A) in its length area (68) interacting with the fastening areas (60, 62).

5. Component in accordance with one of the above claims, **characterized in that** the component (16) is a muffler, preferably a rear muffler (18).

6. Exhaust system for an internal combustion engine, especially in a motor vehicle, comprising a component (16) in accordance with one of the above claims.

## Revendications

1. Composant pour un système d'échappement d'un moteur à combustion interne, comprenant un boîtier de composant (22) allongé dans la direction d'un axe de boîtier (A) avec une entrée de gaz d'échappement (21) et avec une sortie de gaz d'échappement (24) et une unité d'assemblage de support (28) pour connecter le composant (16) à une structure de support, dans lequel l'unité d'assemblage de support (28) comprend une tige de support (36), dans lequel la tige de support (46) est fixée au boîtier de composant (22) dans au moins deux zones de fixation (60, 62) situées à distance l'une de l'autre le long de la tige de support (46) et comprend deux zones d'extrémité de tige de support (48, 50) et à chaque zone d'extrémité de tige de support (48, 50) au moins une zone de connexion de tige de support (52, 54) pour la connexion à une structure de support, dans lequel la tige de support (46) est disposée entièrement à l'extérieur du boîtier de composant (22) et est configurée comme s'étendant essentiellement de manière linéaire entre ses zones de connexion de tige de support (52, 54), dans lequel le boîtier (22) comprend une paroi circonférentielle (36) allongée dans la direction de l'axe du boîtier (A) et dans lequel une paroi frontale (42, 44) est reliée à la paroi circonférentielle (36) par une connexion de forme ou/et de substance dans chaque zone d'extrémité axiale (38, 40) de la paroi circonférentielle (36), dans lequel l'entrée des gaz d'échappement (21) comprend au moins un tuyau d'entrée (20) qui est relié à l'une des parois frontales (42, 44) et dans lequel la sortie des gaz d'échappement (21) comprend au moins un tuyau d'entrée (20) qui est relié à l'une des parois frontales (42, 44) et dans lequel la sortie des gaz d'échappement (24) comprend au moins un tuyau de sortie (26) qui est relié à l'autre paroi frontale (42, 44), dans lequel la tige de support (46) est fixée à la paroi circonférentielle (36) dans au moins deux zones de fixation (60, 62), dans lequel au moins une zone de fixation (60, 62) est prévue dans une zone d'extrémité axiale (38, 40) de la paroi circonférentielle (36) de telle sorte que cette zone de fixation présente une distance plus faible par rapport à la paroi frontale prévue dans cette zone d'extrémité axiale de la paroi circonférentielle (36) que par rapport à une zone centrale axiale de la paroi circonférentielle,
**caractérisé en ce que**
- une autre des zones de fixation (60, 62) est prévue dans l'autre zone d'extrémité axiale (38, 40) de la paroi circonférentielle (36) de telle sorte que cette zone de fixation présente une distance plus faible par rapport à la paroi frontale prévue dans cette zone d'extrémité axiale de la paroi circonférentielle (36) que par rapport à la zone centrale axiale,
- chaque zone de fixation (60, 62) comprend un élément de fixation (64, 66) fixé au boîtier de composant (22) et à la tige de support (46) par connexion en substance, et
- la tige de support (46) est pliée dans ses zones d'extrémité (48, 50) et chaque zone de connexion de la tige de support (52, 54) comprend un élément de connexion (56, 58) en matériau élastique dans au moins certaines zones et relié à la tige de support (46) dans l'une ou l'autre des zones pliées par vissage et/ou connexion en substance.

2. Composant selon la revendication 1, **caractérisé en ce que** l'élément de fixation (64, 66) est fixé au boîtier de composant (22) et à la tige de support (46) par soudage.

3. Composant selon l'une des revendications précédentes, **caractérisé en ce que** la tige de support (46) a une configuration tubulaire.

4. Composant selon l'une des revendications précédentes, **caractérisé en ce que** la tige de support (46) s'étend essentiellement dans la direction de l'axe longitudinal du boîtier (A) dans sa zone de longueur (68) en interaction avec les zones de fixation (60, 62).

5. Composant selon l'une des revendications précédentes, **caractérisé en ce que** le composant (16) est un silencieux, de préférence un silencieux arrière (18).

6. Système d'échappement pour un moteur à combustion interne, notamment dans un véhicule automobile, comprenant un composant (16) selon l'une des revendications précédentes.
